Europäisches Patentamt

European Patent Office

Office européen des brevets

(19)

(11) Numéro de publication : **0 358 655 B1**

(12) **FASCICULE DE BREVET EUROPEEN**

(45) Date de publication du fascicule du brevet :
**03.06.92 Bulletin 92/23**

(51) Int. Cl.⁵ : **F02B 29/06**

(21) Numéro de dépôt : **88903264.5**

(22) Date de dépôt : **25.03.88**

(86) Numéro de dépôt international :
**PCT/FR88/00155**

(87) Numéro de publication internationale :
**WO 88/08073 20.10.88 Gazette 88/23**

(54) **PROCEDE ET DISPOSITIF D'AMENAGEMENT D'UN MOTEUR A DEUX TEMPS A POST-REMPLISSAGE.**

(30) Priorité : **06.04.87 FR 8704757**

(43) Date de publication de la demande :
**21.03.90 Bulletin 90/12**

(45) Mention de la délivrance du brevet :
**03.06.92 Bulletin 92/23**

(84) Etats contractants désignés :
**BE DE FR GB IT**

(56) Documents cités :
**DE-A- 2 607 741**
**DE-A- 2 700 991**
**DE-A- 3 137 490**
**FR-A- 886 556**

(56) Documents cités :
**FR-A- 1 461 224**
**FR-A- 2 346 558**
**FR-E- 88 612**
**GB-A- 294 768**
**US-A- 2 041 708**

(73) Titulaire : **CURTIL, Rémi**
**20, rue Alphonse de Neuville**
**F-75017 Paris (FR)**

(72) Inventeur : **CURTIL, Rémi**
**20, rue Alphonse de Neuville**
**F-75017 Paris (FR)**

(74) Mandataire : **Michardière, Bernard et al**
**C/O CABINET PEUSCET 68, rue d'Hauteville**
**F-75010 Paris (FR)**

EP 0 358 655 B1

Jouve, 18, rue Saint-Denis, 75001 PARIS

## Description

La présente invention concerne généralement et a essentiellement pour objet un procédé et un dispositif d'aménagement d'un moteur à combustion interne à deux temps à pistons notamment alternatifs et à autosuralimentaiton par effet de post-remplissage, tel qu'en particulier mais non exclusivement un moteur à au moins un cylindre à simple effet et un moteur.

Dans l'état de la technique antérieure, on connaît déjà un grand nombre de propositions visant à utiliser l'action directe des gaz sortant d'un cylindre sur une réserve d'air en vue de la comprimer et de l'introduire dans un cylindre à un moment opportun du cycle pour le suralimenter.

La plupart de ces propositions utilisent l'action directe des gaz d'échappement d'un cylindre sur une réserve d'air pour suralimenter un autre cylindre et inversement, le déphasage angulaire des cylindres mis en communication étant judicieusement choisi (voir le brevet suisse CH 593 420).

Les propositions, visant l'utilisation directe de l'énergie des gaz d'échappement d'un cylindre sur une réserve d'air pour améliorer le remplissage et le rendement de ce cylindre, sont beaucoup moins nombreuses, surtout si, parmi celles-ci, on ne retient, pour des raisons évidentes d'efficacité, que celles permettant aux phases de transfert de pression cylindre-réserve d'air-cylindre de s'opérer en milieu clos au sein du système considéré de façon à éviter toute déperdition d'énergie vers l'extérieur.

Pour des raisons de commodité, l'ensemble des éléments constituant le système précité sera désigné ci-après système compresseur.

D'une façon générale, on conviendra de dénommer, ci-après, par air de balayage, l'agent de balayage destiné au renouvellement des gaz brûlés du cylindre, qu'il s'agisse d'air pur ou de tout autre mélange comburant-carburant.

Le nombre des propositions est encore plus restreint si l'on se limite exclusivement à celles permettant d'obtenir un effet de post-remplissage et non une compression de toute la charge admise au cylindre (qu'il est d'ailleurs difficile d'utiliser dans le cas d'un cycle à deux temps si l'on n'élève pas concomitamment la contre-pression à l'échappement).

On entend donc par post-remplissage l'introduction d'une charge d'air additionnelle dans le cylindre, après balayage et fermeture des orifices d'échappement.

L'intérêt du post-remplissage a été reconnu depuis longtemps, en particulier pour le cycle à deux temps.

Il permet en effet, pour un travail de compression externe donné de la charge d'air, d'obtenir le remplissage le plus élevé grâce à une augmentation de la pureté en air du fait que la masse de gaz résiduels non expulsée à la fin de la phase de balayage demeure inchangée durant la phase de post-remplissage et devient relativement plus faible par rapport à la masse d'air totale contenue dans le cylindre après l'effet de post-remplissage. Ceci équivaut à une amélioration du rendement de balayage et à une meilleure utilisation de l'air de balayage.

Un tel dispositif de moteur à deux temps, monocylindre à post-remplissage, est décrit dans le brevet US 1 362 080 et représenté à la figure 5 de ce même brevet.

Dans ce dispositif, le système compresseur comporte un réservoir d'air extérieur au moteur, relié, par l'une de ses extrémités, à un volume formant antichambre à ce réservoir d'air et à un conduit communiquant avec une source d'air de balayage (grâce à l'utilisation d'une soupape à trois voies), et, par l'autre extrémité, à la pipe d'admission conduisant à l'orifice d'admission au cylindre (commandé par un organe de distribution , par exemple du type soupape, logé dans la culasse) et à un premier conduit d'échappement destiné à évacuer les gaz d'échappement, ayant déjà servi, vers l'extérieur (grâce de nouveau à l'utilisation d'une soupape à trois voies).

Le volume formant antichambre au réservoir d'air est lui-même relié, à son extrémité amont, à un clapet anti-retour situé en aval immédiat d'un conduit de pré-échappement relié lui-même à un orifice de pré-échappement (commandé par une lumière aménagée dans la chemise) distinct de l'orifice d'échappement proprement dit (commandé par une lumière aménagée dans la chemise) débouchant sur un deuxième conduit d'échappement, qui est celui du cylindre.

En suivant l'ordre des différentes séquences du cycle du système compresseur, les gaz d'échappement, qui, pendant la phase de pré-échappement (durant cette phase le système constitué par respectivement le cylindre et le volume formant antichambre est fermé vis-à-vis de l'extérieur car l'orifice d'échappement du cylindre et la soupape à trois voies, située en aval dudit volume sont fermés) s'échappent du cylindre par l'orifice de pré-échappement, sont emmagasinés sous pression dans le volume précité, dans l'attente de pouvoir y être transférés et communiquer ainsi leur énergie de pression à l'air préalablement emmagasiné dans ledit réservoir. Le maintien sous pression des gaz d'échappement dans ce volume formant antichambre est rendu possible par la présence du clapet anti-retour précité.

Dans la phase de post-remplissage qui suit, les gaz d'échappement, en pénétrant dans le réservoir (à ce moment fermé vis-à-vis de la source d'air de balayage et du premier conduit d'échappement, mais en communication, par son extrémité amont avec ledit volume formant antichambre et, par son extrémité aval avec la pipe d'admission au cylindre, grâce au positionnement adéquat de respectivement chacune

2

des deux soupapes à trois voies précitées) compriment l'air qui y avait été préalablement emmagasiné et le repoussent à l'intérieur du cylindre alors en communication avec sa pipe d'admission.

Le cycle du système compresseur s'achève par la phase de balayage du réservoir d'air pour renouveler les gaz brûlés, laissés à l'intérieur à la suite de la phase de post-remplissage, par de l'air frais en positionnant les soupapes à trois voies précitées pour faire communiquer ledit réservoir (alors fermé vis-à-vis du volume antichambre et de la pipe d'admission au cylindre) avec respectivement la source d'air de balayage à son extrémité amont et le premier conduit d'échappement à son extrémité aval. On remarque que la phase de balayage du réservoir d'air, qui s'effectue pendant les phases respectivement de compression, de combustion et de détente du cylindre, dispose d'un temps supérieur à celui qui est consacré au balayage du cylindre proprement dit.

On remarque également que, en ce qui concerne plus particulièrement le système compresseur et la phase admission du cycle moteur, le sens principal d'écoulement respectivement des gaz d'échappement, de l'air introduit dans le réservoir d'air et dans le cylindre est unidirectionnel, selon une même direction allant de la lumière de pré-échappement à l'extrémité aval du réservoir d'air située à proximité de la pipe d'admission au cylindre.

Un tel dispositif, bien que réalisant un procédé correspondant à un cycle thermodynamique idéal, présente notamment les inconvénients suivants :

a) La position externe respectivement du réservoir d'air et du volume formant antichambre pour les gaz d'échappement et, la nécessité d'avoir trois soupapes supplémentaires pour assurer la distribution du cycle du système compresseur et de la partie admission du cycle moteur conduisent à un ensemble d'une grande complexité et d'un encombrement important. Cette complexité organique peut difficilement se justifier, en particulier dans le cas d'application à des moteurs multicylindres et dans le contexte technique d'aujourd'hui où notamment la turbosuralimentaiton s'est largement répandue.

b) Ces soupapes supplémentaires sont soit du type à actionnement automatique, qui présente un degré de fiabilité incertain quand elles sont placées dans un flux de gaz à haute température, soit du type à actionnement mécanique, ce qui engendre alors des difficultés tant au niveau de leur lubrification qu'au niveau de leur rapidité d'ouverture et de fermeture et de leur section de passage qui doivent être suffisantes pour exécuter les diagrammes de distribution imposés par le cycle compresseur et la partie admission du cycle moteur.

c) La position des soupapes supplémentaires engendre inévitablement un certain nombre de zones mortes, car il est impossible de toujours contrôler parfaitement la position de l'interface gaz-air, ce qui se traduit soit par une admission de gaz brûlés dans le cylindre à la fin de la phase de post-remplissage ou au contraire une perte d'air frais durant la phase de balayage subséquente du réservoir.

Un but principal de l'invention est de supprimer les inconvénients précités tout en conservant l'avantage principal du dispositif connu précité, à savoir celui de l'autosuralimentation par post-remplissage.

Dans cet esprit, un objectif essentiel de l'invention est de simplifier un tel dispositif et d'en faciliter l'application en intégrant le plus possible le système compresseur aux différentes architectures de moteurs à deux temps qui se sont imposées dans la pratique, notamment mais non exclusivement pour les petits moteurs monocylindre qui connaissent une très large diffusion dans le doamine des petites puissances.

Un autre objectif de l'invention est de permettre la suralimentation de moteurs qui, soit en raison de leur faible nombre de cylindres ou de leur faible cylindrée, se trouvent en dehors du champ d'application de la suralimentation, notamment de la turbosuralimentation.

Encore un autre objectif de l'invention est de permettre une application plus facile des cycles perfectionnés, à course de compression interne raccourcie par rapport à la course de détente, appelés également cycles asymétriques, qui nécessitent un rapport de la pression de suralimentation à la pression moyenne effective plus élevée que pour les cycles symétriques et qui, de ce fait, conduisent très souvent à l'utilisation d'un étage de suralimentation supplémentaire disposé en série, la plupart du temps avec interposition d'une réfrigération intermédiaire. L'invention permet alors de faire l'économie d'un étage de suralimentation ou d'en obtenir un de plus.

Un objectif additionnel de l'invention est de conférer, à ce type de moteur, des caractéristiques améliorées par rapport à celles des moteurs existant en ce qui concerne la puissance massique, la consommation de combustible, les émissions polluantes, y compris l'émission de bruit, la caractéristique de couple.

L'amélioration de la puissance massique ainsi que l'augmentation de la turbulence provenant du champ de vitesse résultant de la phase de post-remplissage sont considérées comme des éléments décisifs de nature à faire bénéficier largement le moteur Diesel de potentialités insuffisamment exploitées dans certains domaines, en particulier celui des faibles cylindrées unitaires.

Un autre objectif de l'invention est d'obtenir un rendement d'utilisation de la charge d'air fournie au cylindre aussi proche que possible de l'unité, en d'autres termes, de réduire les pertes d'air de balayage à l'échappement à une valeur aussi faible que possible, de façon à maintenir l'enthalpie des gaz d'échappement à un niveau aussi élevé que possible en évitant au maximum le phénomène de dilution en vue de l'utilisation ultérieure de l'énergie des gaz d'échappement dans une turbine de suralimentation ou de puissance.

L'invention résout les problèmes techniques posés ci-dessus sous forme d'objectif tout en perfectionnant le procédé exposé.

Elle propose en effet un procédé d'aménagement d'un moteur à combustion interne à deux temps à piston alternatif et à autosuralimentation par effet de post-remplissage, c'est-à-dire introduction d'une charge d'air additionnelle dans le cylindre, après balayage et fermeture des orifices d'échappement, notamment un moteur à au moins un cylindre simple effet dans lequel toutes les phases d'échange de pression entre les gaz concernés, à savoir air de balayage et gaz brûlés, s'effectuent essentiellement en milieu clos au sein d'un système compresseur, le moteur comportant au moins un orifice d'admission, au moins un orifice d'échappement et un et un orifice de pré-échappement, caractérisé en ce qu'il consiste à intégrer complètement le système compresseur à l'ensemble cylindre-culasse du cylindre, en utilisant pour la chambre de travail un orifice d'admission qui assure en plus la fonction de pré-échappement, et en ce qu'on prévoit une chambre de stockage dans le système compresseur reliée à la partie admission du cycle moteur de telle façon que le déroulement des phases successives permette aux gaz d'échappement, lors de la phase de pré-échappement, de pénétrer dans la voie d'alimentation de la chambre de stockage par la même voie qui amène l'air au cylindre, comprimant ainsi l'air, occupant ladite voie, à l'intérieur de ladite chambre de stockage dans l'attente de la phase de post-remplissage, permette ensuite à l'air provenant de la source de balayage du cylindre, lors de la phase de balayage, de balayer ladite voie d'alimentation puis le cylindre lui-même en refoulant les gaz d'échappement, et permette enfin à l'air précédemment accumulé sous pression dans la chambre de stockage de restituer, lors de la phase de post-remplissage, son énergie à l'air présent dans ladite voie d'alimentation, alors en communication avec le cylindre.

L'invention propose également que les fonctions respectivement de chambre de stockage et de distribution soient assurées exclusivement par la coopération du cylindre et du piston.

Elle propose en particulier que la chambre de stockage soit délimitée par une capacité intérieure au piston.

Cette proposition présente l'avantage de réaliser le cycle, thermodynamiquement idéal, tel que défini précédememnt, sans introduire aucun organe de distribution supplémentaire utilisant des pièces mobiles supplémentaires.

Elle présente également l'avantage de conserver l'encombrement du moteur à deux temps.

On remarque que l'organisation du balayage de la voie d'alimentation de la chambre de stockage d'air, qui se confond avec la partie aval de la voie d'admission au cylindre, puis du cylindre proprement dit avec un seul et unique front d'air provenant de la source d'air de balayage, permet d'éliminer complètement l'inconvénient des zones mortes précitées.

La plupart des types de distribution, ainsi que la plupart des types de source d'air, de même que la plupart des types de balayage usuels des moteurs à deux temps peuvent être utilisés en liaison avec l'invention. En ce qui concerne les types de distribution, l'invention n'est pas limitée à des orifices d'échappement et d'admission ménagés dans la paroi du cylindre sous forme de lumières, mais est applicable à des soupapes logées dans la culasse. En ce qui concerne la source d'air, toutes les formes connues de sources d'air, fournissant le débit d'air nécessaire au balayage permettant à l'air d'arriver par dessous le piston, peuvent être utilisées, notamment :

– pompe de type volumétrique, du type intégré ou interne au moteur, comme le système carter pompe, ou un espace sous piston pour moteur à crosse, ou du type externe entrainé ;

– soufflante externe entrainée mécaniquement ou par les gaz d'échappement ;

– ou toutes combinaisons des deux systèmes précédents.

On remarque que les deux phases, correspondant respectivement à la pressurisation de la chambre de stockage d'air et à l'autosuralimentation par post-remplissage, sont par la nature même du type de distribution, assurée par le mouvement du piston, réparties de façon symétrique par rapport au point mort bas du cycle moteur.

La position et la durée angulaires des deux phases précitées peuvent cependant être choisies à l'intérieur d'un très large domaine, à partir d'une zone voisine du point mort bas, favorable à la conservation d'une course utile maximale jusqu'à, au contraire, une zone quelconque de la course de compression.

Le volume de la voie d'alimentation, ainsi que celui de la chambre de stockage d'air, sont naturellement fonction du type de diagramme retenu pour les phases d'échange de pression précitées.

L'application de cet aménagement n'entraîne la résolution d'aucun problème technique supplémentaire, si l'on excepte la résolution de la réfrigération de la voie d'alimentation de la réserve d'air et de la chambre de stockage d'air elle-même, ce qui présente un intérêt bien connu en soi, résolution qui ne pose par ailleurs pas de problème technique nouveau.

La solution consistant à réaliser le pré-échappement dans la voie d'admission au cylindre présente l'avantage, dans le cas où une réfrigération de la voie précitée est prévue, de ne refroidir que les gaz d'échappement utilisés pour l'autosuralimentation et non la totalité, comme cela serait le cas s'il était réalisé dans la voie d'échappement, ce qui engendrerait alors une diminution de l'enthalpie préjudiciable, si l'invention est utilisée avec un système de suralimentation supplémentaire ou une turbine de puissance externe.

Le procédé selon l'invention est susceptible d'un grand nombre d'applications industrielles, tout particulièrement dans le cadre des moteurs Diesel ou à allumage commandé ne pouvant pas, ou très difficilement, être suralimentés.

Selon un deuxième aspect, la présente invention fournit également un dispositif d'aménagement d'un moteur à combustion interne à deux temps, à piston alternatif , et à autosuralimentation par effet de post-remplissage, notamment un moteur à au moins un cylindre à simple effet, dans lequel toutes les phases d'échange de pression entre les gaz concernés s'effectuent essentiellement en milieu clos au sein d'un système compresseur comprenant un système de post-remplissage, caractérisé en ce que le système de post-remplissage comprend le conduit d'admission d'air au cylindre qui communique par intermittence soit avec la source d'air de balayage, soit avec une chambre de stockage de gaz sous pression. En pratique, ce gaz est constitué par de l'air de balayage.

Selon une variante de réalisation du dispositif selon l'invention, celui-ci est caractérisé en ce que le conduit d'admission d'air débouche en aval dans le cylindre à un niveau supérieur à celui de la lumière du conduit d'échappement, de façon à assurer le pré-échappement par le conduit d'admission en vue de remplir la chambre de stockage précitée.

Selon un mode de réalisation particulièrement avantageux du dispositif selon l'invention, celui-ci est caractérisé en ce que la chambre de stockage est interne au piston et est reliée en amont du conduit d'admission au cylindre par une lumière ménagée dans le piston, mise en communication par intermittence avec ledit conduit d'admission d'air par le mouvement naturel du piston dans le cylindre. De préférence, cette chambre est réalisée annulaire entre le logement de la bielle ou de la tige de piston et la jupe extérieure du piston.

Selon une variante de réalisation particulière de ce piston, ledit piston comprend un conduit d'amenée d'air depuis la source d'air aboutissant par intermittence en amont du conduit d'admission d'air au cylindre par le mouvement naturel du piston dans le cylindre. Ce qui permet de mettre d'une manière très simple en communication la source d'air avec l'entrée du conduit d'admission au cylindre. De préférence, ce conduit d'amenée d'air communique en aval par des lumières avec un conduit annulaire disposé au dessus de la chambre de stockage et sous la tête du piston.

Selon un autre mode de réalisation particulier du dispositif selon l'invention, celui-ci est caractérisé en ce que le conduit d'admission d'air est formé par au moins un conduit coudé se déroulant autour du cylindre pour présenter un volume suffisant pour constituer une réserve d'air de remplissage servant au post-remplissage.

On obtient ainsi tous les avantages techniques déterminants précédemment énoncés pour le procédé.

D'autres buts, caracréristiques et avantages de l'invention apparaîtront clairement à la lumière de la description explicative qui va suivre faite en référence aux dessins annexés représentant un mode de réalisation actuellement préféré du dispositif selon l'invention, permettant la mise en oeuvre du procédé selon l'invention précédemment énoncée.

Dans les dessins :

– les figures 1a et 1b représentent en coupe axiale, verticale, un cylindre d'un moteur à combustion interne à deux temps, à pistons alternatifs, et à autosuralimentation par effet de post-remplissage, conforme au mode de réalisation actuellement préféré de l'invention, dans lequel le piston se trouve au point mort haut (PMH), la bielle, ou la tige de piston, dans le cas d'un moteur à crosse, n'étant pas représentée pour plus de clarté ;

– la figure 2 représente une vue de dessus du cylindre représenté aux figures 1a et 1b avec coupe partielle des conduits d'admission et d'échappement ;

– les figures 3a et 3b constituent des vues similaires aux figures 1a et 1b mais représentent le piston en position de début de pré-échappement ;

– les figures 4a et 4b sont des vues similaires aux figures 1a et 1b mais représentent le piston au début de la phase d'échappement ;

– les figures 5a et 5b sont des vues similaires aux figures 1a et 1b mais représentent le piston au point mort bas (PMB) ;

– les figures 6a et 6b sont des vues similaires aux figures 1a et 1b mais représentent le piston au moment de la fin de la phase de post-remplissage ;

– la figure 7 représente un exemple de diagramme de fonctionnement du cycle du moteur conforme à l'invention ;

– la figure 8 représente le diagramme logarithmique des pressions et volumes durant le cycle, la courbe en pointillés représente le diagramme P, V du conduit d'admission (22), la courbe en trait continu épais représente le diagramme P,V de la chambre de stockage (30) et la courbe en trait continu fin représente le diagramme P, V de la chambre de travail du cylindre. Les position du piston représentées successivement aux figures 1a, b ; 3a, b ; 4a, b ; 5a, b ; et 6a, b sont reportées aux endroits correspondants du cycle P, V sur le diagramme de la figure 8 ;

– les figures 9a et 9b représentent une variante de réalisation des conduits d'admission avec des moyens de réfrigération agencés pour favoriser simultanément l'écoulement des gaz dans ces conduits ainsi qu'une interface franche F entre les gaz de pré-échappement et l'air de balayage, et

– la figure 10 représente schématiquement en coupe partielle un moteur équipé d'un dispositif selon l'invention tel que représenté à l'une des figures précédentes, non montré pour simplification, mais montrant une réalisation de source d'air par carter-pompe équipé ici d'une admission par clapet anti-retour. On a représenté une réfrigération possible par chambre d'eau des conduits d'admission et une turbine qui est soit la turbine d'un étage haute pression d'un turbocompresseur, soit une turbine de puissance pouvant être reliée mécaniquement au moteur.

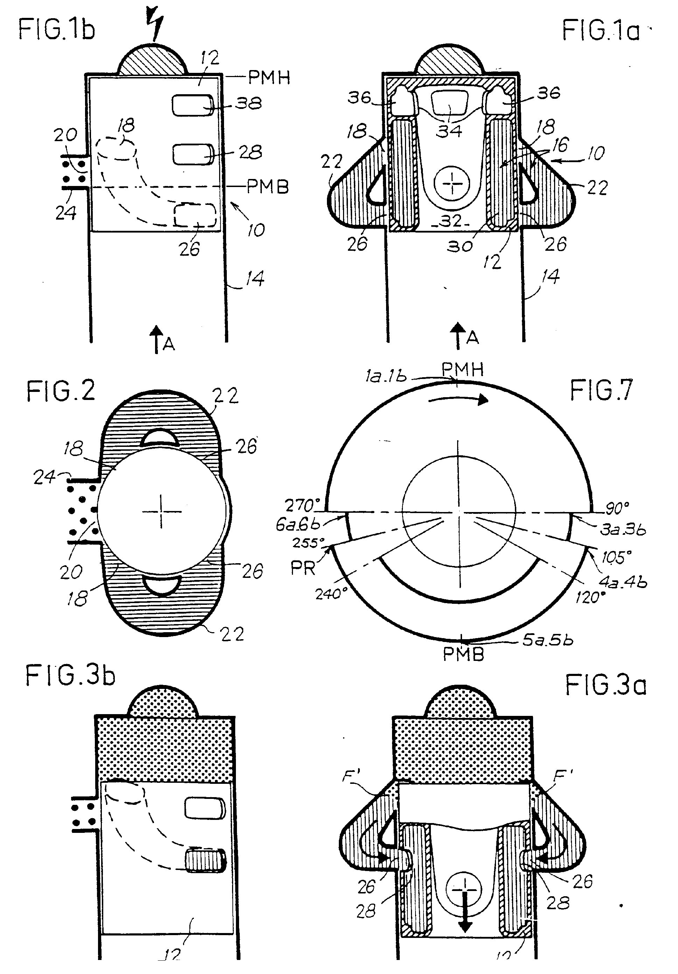

En référence, plus particulièrement aux figures 1a et 1b, on a représenté un dispositif conforme à l'invention repéré par le numéro de référence général 10 d'aménagement d'un moteur à combustion interne à deux temps, à piston 12 alternatif et à autosuralimentation par effet de post-remplissage, notamment de un moteur à au moins un cylindre 14.

Ce moteur comprend un système de post-remplissage 16.

Le dispositif selon l'invention comprend ici deux lumières d'admission 18 disposées symétriquement sur le cylindre 14, ainsi qu'une seule lumière d'échappement 20 (clairement visible à la figure 1b), bien que l'on puisse prévoir plusieurs lumières d'échappement.

Selon l'invention, le dispositif de post-remplissage 16 comprend l'une (18) des lumières d'admission 18 ou d'échappement 20 respectivement associée à son conduit d'admission 22 ou d'échappement 24 , qui assure le pré-échappement, sert aussi respectivement de voie d'admission ou de voie d'échappement, et enfin de voie de post-remplissage.

Dans l'exemple représenté aux figures 1 à 6, c'est la lumière d'admission 18 associée à son conduit d'admission 22 qui assure le pré-échappement, sert de voie d'admission et encore de voie de post-remplissage.

Pour ce faire, le conduit d'admission 22 communique par intermittence soit avec la source d'air de balayage, symbolisée par la flèche A, (qui sera constituée dans la plupart des cas par une pompe volumétrique, par exemple du type à carter pompe bien connu), soir avec une chambre 30 de stockage de gaz sous pression.

Selon un mode de réalisation particulièrement avantageux, le conduit d'admission 22 débouche en aval dans le cylindre, par la lumière 18, à un niveau situé au dessus de celui de la lumière d'échappement 20 pour assurer le pré-échappement par le conduit d'admission 22 en vue de remplir la chambre de stockage 30.

Selon un mode de réalisation actuellement préféré, le conduit d'admission 22 débouche en amont dans le cylindre par une lumière 26, qui est ici représentée toujours recouverte par le piston durant toute sa course et située en dessous de la lumière d'échappement 20. La chambre de stockage 30 est réalisée interne au piston 12 et est reliée par au moins une lumière 28 ménagée dans le piston 12, que l'on voir clairement à la figure 3a, mise en communication par intermittence en amont du conduit d'admission d'air 22, c'est-à-dire avec la lumière 26, par le mouvement naturel du piston 12. La chambre de stockage est préférence réalisée annulaire entre le logement de la bielle ou de la tige de piston et la jupe extérieure du piston 12.

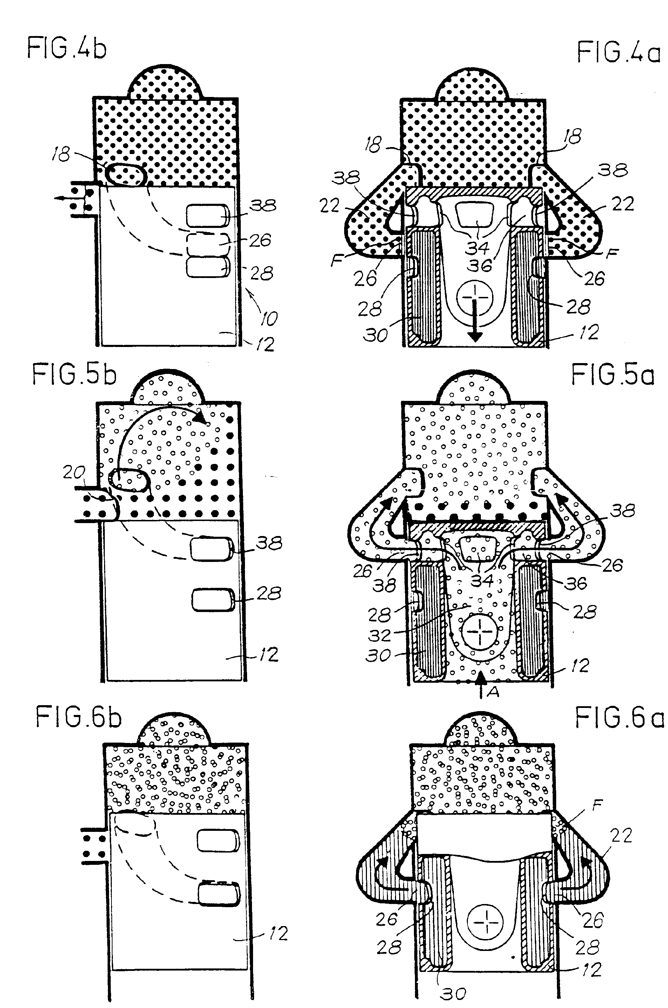

Le piston 12, selon une variante de réalisation particulière, comprend un conduit 32 d'amenée d'air, qui est représenté ici interne, qui est par exemple constitué par le logement nécessaire à l'articulation de la bielle avec le piston 12. Ce conduit 32 communique en amont avec la source d'air A et en aval, par des lumières 34 avec un conduit annulaire 36 disposé au dessus de la chambre de stockage 30 sous la tête du piston qui communique par intermittence en amont du conduit d'admission 22 par deux lumières 38, clairement visibles aux figures 4a, 4b et 5a, 5b. La position de communication de ces lumières 38 avec le conduit d'admission 22 est représentée clairement à la figure 5a, en position de point mort bas, au milieu de la phase de balayage.

Selon un autre mode de réalisation particulièrement avantageux du dispositif selon l'invention, le conduit d'admission 22 est formé par au moins un conduit coudé , qui est clairement visible aux figures, se déroulant autour du cylindre 14 pour présenter un volume suffisant pour constituer une réserve d'air de remplissage servant au post-remplissage, comme cela sera expliqué plus loin en référence au procédé de fonctionnement de ce moteur.

Selon une autre caractéristique du dispositif selon l'invention, la longueur du piston 12 est telle qu'au point mort haut, le piston 12 obture l'orifice amont 26 du conduit d'admission 22, cette position étant clairement visible aux figures 1a et 1b.

Selon une variante de réalisation, le volume de la chambre de stockage 30 représente habituellement de 30 à 60 % environ de la cylindrée du cylindre 14.

En outre, avantageusement, le volume du conduit d'admission 22 et le volume de la chambre de stockage 30 sont calculés en relation avec le volume du cylindre 14 et les conditions thermodynamiques régnant dans le cylindre 14 au moment du pré-échappement pour que le front d'interface F de séparation des gaz de pré-échappement avec l'air refoulé en direction de la chambre de stockage 30 , de préférence, ne pénètre pas dans la chambre de stockage 30 en fin de phase de pré-échappement (voir figure 4a).

Il est à noter que le volume total des conduits d'admission 22 est légèrement inférieur au volume de la chambre de stockage 30 et est fonction des conditions de fonctionnement thermodynamiques du cycle, en particulier du rapport air/combustible. Plus le rapport air/combustible est faible et est proche du rapport stoechiométrique, plus l'autosuralimentation par effet de post-remplissage est élevé, ce qui est généralement atteint par une augmentation du volume des conduits d'admission 22.

Egalement, le volume de la chambre de stockage 30 ainsi que le volume du conduit d'admission 22 dépendent du volume de la chambre de combustion définie par la position du piston au début de la phase de pré-échappement.

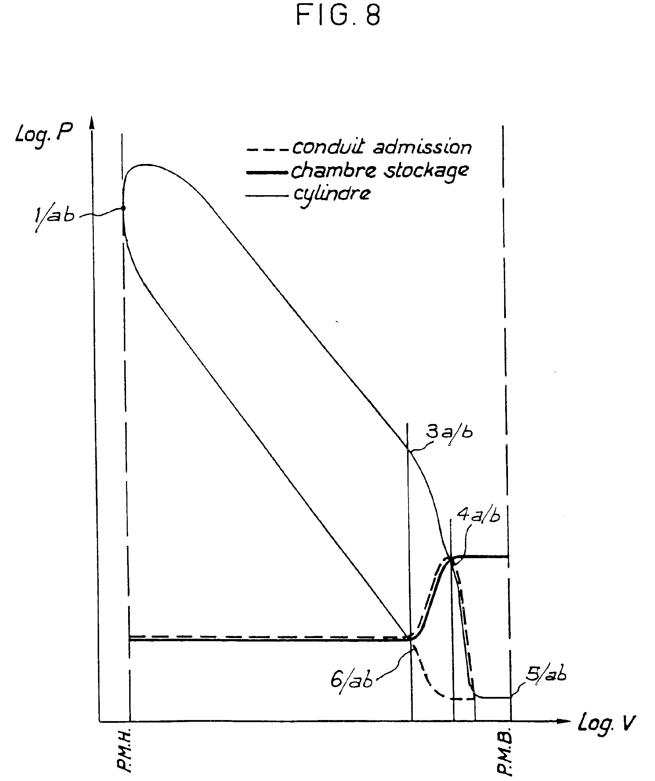

Nous allons maintenant décrire un cycle d'un tel moteur équipé d'un dispositif selon l'invention à partir de l'exemple du diagramme de fonctionnement représenté à la figure 7.

Pour ce faire, nous avons distingué les différents fluides en représentant les gaz brûlés de pré-échappement ou d'échappement par des cercles pleins d'autant plus resserrés que la pression est élevée, l'air d'admission de balayage par des bulles de même plus ou moins resserrées en fonction de la pression et enfin l'air présent dans la chambre de stockage 30 servant de ressort pneumatique, entre deux positions extrêmes, par des traits plus ou moins resserrés en fonction des pressions, la phase haute pression étant représentée aux figures 4a, 4b er 5a, 5b, et la phase de pression moyenne égale à celle de la fin du post-remplissage est représentée aux figures 6a,6b ;1a,1b et 3a, 3b.

Ainsi, en partant de la position du piston au point mort haut, représentée aux figures 1a et 1b, pour laquelle le conduit d'admission d'air 22 et la chambre de stockage 30 sont remplis d'air à une pression moyenne constituée par la pression de fin de post-remplissage, le vilebrequin décrit un angle de 90° pour aboutir à la position de début de pré-échappement représenté aux fibures 3a er 3b. Au cours de cette rotation, on comprend que le piston a débuté sa descente et réalisé une détente, ce qui est clairement représenté par l'évolution des pressions et des volumes sur le diagramme de la figure 8. A ce stade, le pré-échappement débute dans le conduit d'admission 22, tandis que la lumière 28 met en communication la chambre de stockage 30 avec la lumière amont 26 du conduit d'admission 22. Pendant cette phase de pré-échappement, on conçoit aisément que l'on recomprime l'air, représenté en traits continus épais, formant ressort pneumatique en le repoussant en direction de la chambre de stockage 30.

Lors de la poursuite de la rotation du vilebrequin, par exemple d'un angle de 15°, on aboutit à la position des figures 4a et 4b, c'est-à-dire en fin de phase de pré-échappement. A ce stade, le front F se situe sensiblement au niveau de la lumière 26 du conduit d'admission 22. Ainsi, l'air formant ressort pneumatique se trouve à ce moment là à une pression de compression maximale entièrement à l'intérieur de la chambre de stockage 30.

A la fin de cette phase de pré-échappement, on aboutit naturellement au début de l'échappement, comme représenté à la figure 4b.

Ensuite, pendant une rotation, par exemple d' encore 15°, qui est nécessaire pour aboutir à une chute de pression dans le cylindre et dans le conduit d'admission 22 jusqu'à la pression de balayage fournie par la source d'air A, le piston 12 continue sa course jusqu'au moment où la lumière 38 vient en regard de la lumière 26 du conduit d'admission 22, moment où débute la phase de balayage par le balayage du conduit 22.

On signalera ici que la phase de balayage débute par le refoulement du front d'interface F de la figure 4a à l'intérieur des conduits d'admission 22, en direction du cylindre, le balayage proprement dit du cylindre ne commençant qu'une fois que le front F a atteint la lumière 18.

Le vilebrequin poursuit sa rotation pour aboutir au point mort bas PMB, représenté aux figures 5a et 5b. Dans cette position, nous sommes au milieu de la phase de balayage où l'on observe à la considération des figures 5a et 5b, que la proportion des gaz d'échappement restant dans le cylindre a déjà beaucoup diminué.

Le vilebrequin poursuit sa rotation jusqu'à atteindre l'angle de rotation de 240°, position pour laquelle le piston vient obturer la communication entre la lumière 26 des conduits d'admission 22 et les lumières 38 du piston 12, puis après une nouvelle rotation de 15° du vilebrequin, la lumière d'échappement 20 est à son tour obturée par le piston 12. Cet instant est celui où débute le post-remplissage symbolisé par les lettres P.R. à la figure 7.

Le post-remplissage se poursuit ici par exemple pendant encore un angle de 15° de vilebrequin pour aboutir à la position représentée aux figures 6a et 6b de fin de post-remplissage.

On observera que pendant cette phase de post-remplissage, l'air formant ressort pneumatique stocké sous pression maximale dans la chambre de stockage 30 s'est échappé dans le conduit d'admission 22 par mise en communication des lumières 28 avec les lumières 26, comme clairement représenté à la figure 6a. Cette position intermédiaire de la figure 6a est identique à la position intermédiaire de la figure 3a.

On observera qu'en fin de post-remplissage, le front intermédiaire F' est représenté ici restant dans le conduit d'admission 22, tout en étant proche du cylindre, mais du fait que de préférence les gaz brûlés n'auront pas pénétré dans la chambre de stockage 30, rien ne s'oppose à ce que ce front F' puisse dans certains cas de fonctionnement pénétrer dans le cylindre.

La poursuite de la rotation du vilebrequin jusqu'au point mort haut assure la compression habituelle de la phase de compression du cycle précédant la phase d'allumage-combustion. Pendant toute cette phase, l'air détendu lors du post-remplissage reste dans la chambre de stockage 30 à cette pression détendue moyenne, ainsi que dans les conduits d'admission 22 jusqu'au début du pré-échappement représenté à la figure 3a.

On observera qu'avec l'invention, comme ceci a été décrit dans le document MOTOSACOCHE CH-593 420 précité, l'autosuralimentation par effet de post-remplissage et le champ de turbulence induits dans le chambre de combustion sont d'autant plus prononcés que le régime est faible.

On observera que la caractéristique naturelle se traduit par une position extrême du front F, tel qu'ici représenté, d'autant plus proche de la chambre de stockage 30 que le régime de fonctionnement du moteur est faible.

Naturellement, l'invention comprend tous les moyens constituant des équivalents techniques des moyens décrits ainsi que leurs diverses combinaisons.

En particulier, on pourra modifier les positions respectives des diverses lumières de façon à permettre un certain recouvrement des phases de pré-échappement, d'échappement, de balayage, de post-remplissage.

En particulier, la présence d'un recouvrement, entre l'ouverture de la lumière d'échappement et la fermeture de la communication entre la chambre de stockage 30 et l'amont du conduit d'admission 22, permet d'agir sur la position extrême du front F, et à la limite d'obtenir une position extrême sensiblement constante de ce front F quel que soit le régime de fonctionnement du moteur.

Selon l'invention, la durée et la position dans le cycle du post-remplissage, tant dans sa phase de pré-échappement que dans sa phase de post-remplissage, peuvent être fixées à volonté, ce qui est un avantage déterminant par rapport aux systèmes antérieurs.

On notera que la configuration prévue, du piston 12 avec un conduit annulaire 36 délimité à l'extérieur par le haut de la jupe du piston et à l'intérieur par les parois formant voûte conduisant les efforts à l'axe ou à la tige du piston, confère à l'ensemble une axi-symétrie thermique et mécanique. Cette axi-symétrie permet de créer naturellement des conditions extrêmement favorables pour la réfrigération du piston et par voie de conséquence le choix des jeux de fonctionnement piston-chemise. Si le contrôle extérieur de refroidissement de la chemise est lui aussi homogène et axi-symétrique, il est alors possible de réaliser le piston parfaitement cylindrique, ce qui constitue un avantage de fabrication considérable.

Avantageusement, on pourra veiller à ce que le niveau thermique des conduits d'admission 22 et du piston 12 soit contrôlé par une réfrigération appropriée. On fera appel pour ce faire à tous les moyens connus de réfrigération, par exemple :
   – par ailettes de refroidissement dans le cas d'un refroidissement par air du moteur ;
   – par chambre d'eau ou par conduit foré ou encore réalisé par moulage en fonderie, dans le cas d'un refroidissement par eau, technique connue par ailleurs sous le nom de "bore cooling".

Il est encore à observer que dans les dessins, dans un but de simplification, compte tenu du fait que les conduits d'admission 22 se déroulent autour du cylindre, à certains moments, des lumières qui n'étaient pas nécessaires n'ont pas été représentées, tandis qu'à d'autres moments, des lumières qui n'étaient pas dans le même plan, ni dans le plan du dessin, ont néanmoins été représentées dans le plan des figures portant l'indice a pour une meilleure compréhension du fonctionnement.

Il est encore à noter que le cycle de fonctionnement du cycle de post-remplissage proprement dit, dans sa phase initiale de pré-échappement, d'échappement et de début de balayage, est pour une large part gouverné par des phénomènes de nature instationnaire, de manière analogue au "COMPREX" ou au fonctionnement décrit dans le document CH-A-593 420, ce qui permet de bénéficier des avantages de l'autobalayage, soit en complément du balayage positif organisé à l'aide d'une pompe volumétrique ou d'une soufflante, soit à la limite pour certains points de fonctionnement du moteur, comme seul outil de balayage.

Au prix d'une certaine détérioration du rendement du cycle d'autosuralimentation proposé, il est à noter qu'il est toujours possible de raccourcir la longueur du piston en renonçant à ce que, au voisinage du point mort haut, la jupe de piston recouvre la lumière 26 en amont du conduit d'admission 22, ce qui se traduit alors par une décharge de l'air contenu dans le conduit 22, à la fin du post-remplissage, dans l'espace sous piston relié à la source d'air A. Ceci peut notamment présenter un intérêt dans le cas où le moteur à deux temps possède une distribution, non par lumière d'échappement mais par soupapes logées dans la culasse, ce qui permet de s'affranchir de la nécessité d'avoir un piston suffisamment long pour recouvrir la lumière d'échappement.

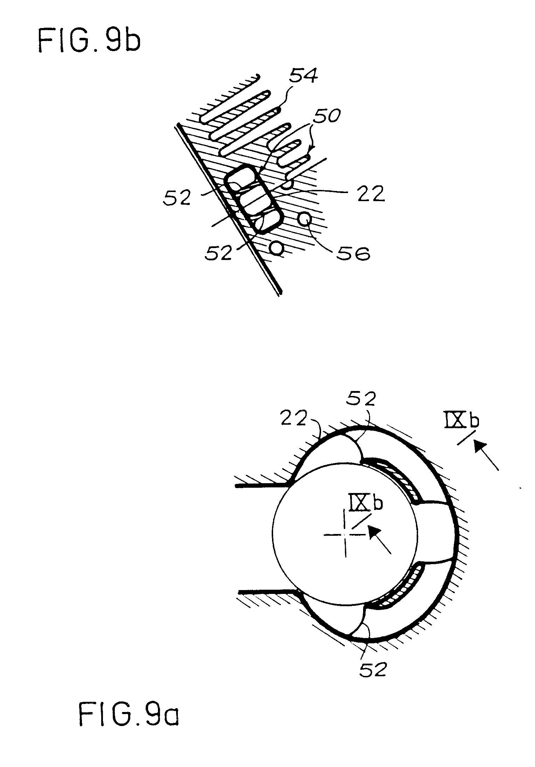

Une autre modification possible réside dans le fait que l'on peut prévoir, comme représenté à la figure 9a, dans le cas de la présence d'au moins deux conduits d'admission 22, comme ici représentés, que les lumières 26 en amont des conduits 22 soient confondues de manière à ne former alors qu'une seule lumière, en prévoyant que les deux extrémités amont des conduits d'admission 22 se rejoignent au droit de cette lumière unique. A la figure 9a comme à la figure 2, on observera que les conduits d'admission 22 sont disposés symétriquement par rapport au plan de symétrie de balayage qui coïncide sensiblement avec le plan de symétrie longitudinal du cylindre passant par les lumières d'échappement 20.

A la figure 9, on a représenté des moyens de réfrigération 50 agencés de manière à favoriser simultanément l'écoulement des gaz dans les conduits d'admission 22 ainsi que des interfaces franches F entre les gaz de pré-échappement et l'air de balayage. Par exemple, ces moyens de réfrigération 50 comprennent des cloisons transversales 52 permettant d'évacuer le flux thermique vers des moyens de réfrigérarion extérieurs aux conduits 22 classiques tels que ailettes 54 ou conduits de réfrigération type bore cooling 56.

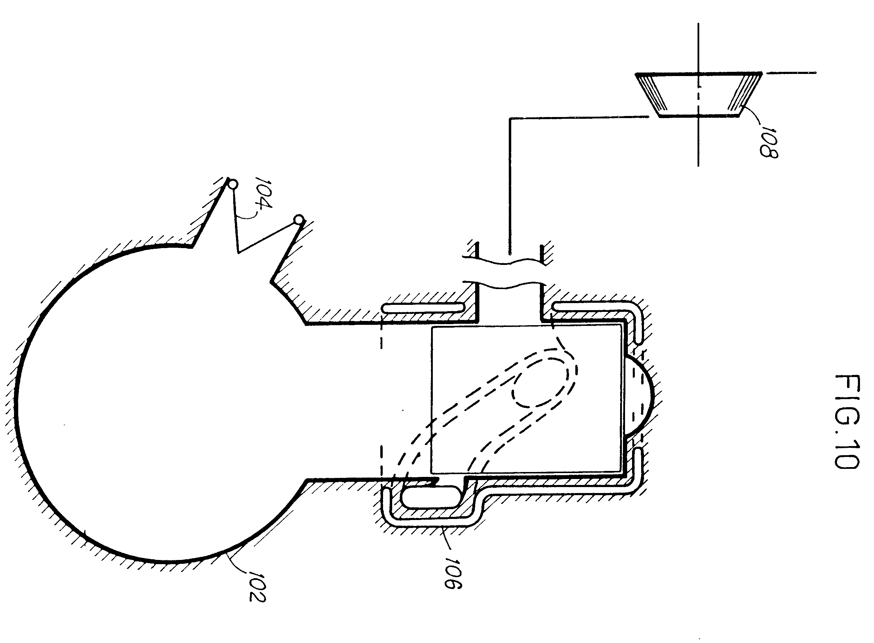

A la figure 10, on a représenté un moteur 100 équipé d'un dispositif selon l'invention comprenant un carter-pompe 102, une alimentation par clapet 104, une réfrigération par chambre d'eau 106 et une turbine 108.

Par ailleurs, selon une variante de réalisation avantageuse du procédé de l'invention, on ne réfrigère pas le moteur aux faibles charges en interrompant le circuit de réfrigération du moteur, et notamment des voies d'alimentation incluant les conduits d'admission, tandis que l'on réfrigère depuis les charges intermédiaires jusqu'à une charge maximale en ouvrant le circuit de réfrigération.

L'absence de réfrigération aux faibles charges permet d'élever la température de l'air d'admission grâce à son réchauffement par les parois des conduits d'admission, eux-mêmes réchauffés par les gaz de pré-échappement.

L'élévation des températures des gaz d'admission augmente leur volume et produit ainsi une diminution du volume des gaz d'échappement résiduels dans le cylindre, ce qui influence favorablement le seuil d'inflammabilité minimale du mélange air de balayage-gaz résiduels principalement dans le cas des moteurs à allumage commandé.

## Revendications

1. Procédé d'aménagement d'un moteur à combustion interne à deux temps à piston alternatif (12) et à autosuralimentation par effet de post-remplissage, c'est-à-dire introduction d'une charge d'air additionnelle dans le cylindre après balayage et fermeture des orifices d'échappement, notamment un moteur à au moins un cylindre (14) simple effet, dans lequel toutes les phases d'échange de pression entre les gaz concernés, à savoir air de balayage et gaz brûlés, s'effectuent essentiellement en milieu clos au sein d'un système compresseur, le moteur comportant au moins un orifice d'admission (18), au moins un orifice d'échappement (20) et un orifice de pré-échappement, caractérisé en ce qu'il consiste à intégrer complètement le système compresseur à l'ensemble cylindre-culasse du cylindre, en utilisant pour la chambre de travail un orifice d'admission (18) qui assure en plus la fonction de pré-échappement, et en ce qu'on prévoit une chambre de stockage (30) dans le système compresseur reliée à la partie admission du cycle moteur de telle façon que le déroulement des phases successives permette aux gaz d'échappement, lors de la phase de pré-échappement, de pénétrer dans la voie d'alimentation de la chambre de stockage (30) par la même voie (22) qui amène l'air au cylindre, comprimant ainsi l'air, occupant ladite voie (22), à l'intérieur de ladite chambre de stockage (30) dans l'attente de la phase de post-remplissage, permette ensuite à l'air provenant de la source (A) de balayage du cylindre (14), lors de la phase de balayage, de balayer ladite voie d'alimentation (22) puis le cylindre lui-même en refoulant les gaz d'échappement, et permette enfin à l'air précédemment accumulé sous pression dans la chambre de stockage (30) de restituer, lors de la phase de post-remplissage, son énergie à l'air présent dans ladite voie d'alimentation (22), alors en communication avec le cylindre (14).

2. Procédé selon la revendication 1, caractérisé en ce que les fonctions respectivement de chambre de stockage (30) et de distribution sont assurées exclusivement par la coopération du cylindre (14) et du piston (12).

3. Procédé selon la revendication 1 ou 2, caractérisé en ce que la chambre de stockage (30) est délimitée par une capacité intérieure du piston (12).

4. Procédé selon l'une des revendications précédentes, caractérisé en ce que la voie d'alimentation (22) de la chambre de stockage est soumise à un refroidissement approprié.

5. Procédé selon l'une des revendications prédédentes, caractérisé en ce que la chambre de stockage (30) est soumise à un refroidissement approprié.

6. Procédé selon l'une des revendications précédentes, caractérisé par l'utilisation complémentaire d'une turbine de puissance (108) prélevant une fraction de la chute d'enthalpie des gaz d'échappement.

7. Procédé selon l'une des revendications 4 à 6, caractérisé en ce que la réfrigération d'au moins les voies d'alimentation est interrompue aux faibles charges.

8. Dispositif d'aménagement d'un moteur à combustion interne à deux temps, à piston alternatif (12), et à autosuralimentation par effet de post-remplissage, c'est-à-dire introduction d'une charge d'air aditionnelle dans le cylindre après balayage et fermeture des orifices d'échappement, notamment un moteur à au moins un cylindre (14) à simple effet, dans lequel toutes les phases d'échange de pression entre les gaz concernés à savoir air de balayage et gaz brûlés, s'effectuent essentiellement en milieu clos au sein d'un système compresseur comprenant un système de post-remplissage, caractérisé en ce que le système de post-remplissage (16) comprend le conduit d'admission (22) d'air au cylindre (14), qui communique par intermittence soit avec la source d'air (A) de balayage, soit avec une chambre (30) de stockage de gaz sous pression.

9. Dispositif selon la revendication 8, caractérisé en ce que le conduit (22) d'admission d'air débouche en aval dans le cylindre (14) à un niveau supérieur à celui de la lumière (20) du conduit d'échappement (24), de façon à assurer le pré-échappement par le conduit d'admission (22) en vue de remplir la chambre de stockage précitée.

10. Dispositif selon la revendication 8 ou 9, caractérisé en ce que la chambre (30) de stockage est interne au piston (12) et est reliée, en amont du conduit d'admission d'air (22) au cylindre (14), par au moins une lumière (28) ménagée dans le piston, mise en communication par intermittence avec ledit conduit d'admission d'air (22) par le mouvement naturel du piston dans le cylindre.

11. Dispositif selon la revendication 10, caractérisé en ce que la chambre (30) de stockage est réalisée annulaire entre le logement de la bielle ou de la tige de piston et la jupe extérieure du piston (12).

12. Dispositif selon la revendication 9 ou 11, caractérisé en ce que ledit piston (12) comprend un conduit d'amenée d'air (32) depuis la source d'air aboutissant par intermittence en amont (en 26) du conduit d'admission d'air (22) au cylindre (14) par le mouvement naturel du piston (12) dans le cylindre (14).

13. Dispositif selon la revendication 12, caractérisé en ce que le conduit (32) d'amenée d'air communique en amont avec la source d'air (A) et en aval par des lumières (34) avec un conduit annulaire (36) disposé au-dessus de la chambre de stockage (30) et sous la tête de piston (12), et qui communique par intermittence en amont du conduit d'admission (22) par une lumière (38).

14. Dispositif selon l'une des revendications 8 à 13, caractérisé en ce que le conduit (22) d'admission d'air est formé par au moins un conduit coudé se déroulant autour du cylindre (14) pour présenter un volume suffisant pour constituer une réserve d'air de remplissage servant au post-remplissage.

15. Dispositif selon l'une des revendications 8 à 14, caractérisé en ce que la longueur du piston (12) est telle qu'au point mort haut, le piston (12) obture la lumière amont (26) du conduit d'admission (22).

16. Dispositif selon l'une des revendications 8 à 15, caractérisé en ce que le volume de la chambre de stockage (30) représente habituellement de 30 à 60 % environ de la cylindrée du cylindre (14).

17. Dispositif selon l'une des revendications 8 à 16, caractérisé en ce que le volume du conduit d'admission (22) et le volume de la chambre de stockage (30) sont calculés en relation avec le volume du cylindre (14) et les conditions thermodynamiques régnant dans le cylindre (14) au moment du pré-échappement pour que le front d'interface (F) de séparation des gaz de pré-échappement avec l'air refoulé en direction de la chambre de stockage (30), de préférence ne pénètre pas dans la chambre de stockage (30), en fin de phase de pré-échappement.

18. Dispositif selon l'une des revendications 8 à 17, caractérisé en ce que le volume total des conduits d'admission (22) est légèrement inférieur au volume de la chambre de stockage (30) et est fonction des conditions de fonctionnement thermodynamiques du cycle, en particulier du rapport air/combustible.

**Patentansprüche**

1. Verfahren zum Beschicken eines Zweitakt-Verbrennungs-motors mit Hubkolben (12) und Selbstaufladung durch Nachladung, das heißt durch Einbringen einer zusätzlichen Luftcharge in den Zylinder nach dem Spülen und dem Verschließen der Auslaßöffnungen, insbesondere eines Motors mit mindestens einem einfach wirkenden Zylinder (14), bei dem alle Druck-wechselphasen der beteiligten Gase, und zwar der Spülluft und der Verbrennungsgase, im wesentlichen in einer mit dem Inneren eines Verdichtungssystems verbundenen Umgebung ablaufen, wobei der Motor mindestens eine Einlaßöffnung (18), mindestens eine Auslaßöffnung (20) und eine Vorauslaßöffnung aufweist, **dadurch gekennzeichnet**, daß man das Verdichtungssystem vollständig in die durch den Zylinder und den Zylinderkopf gebildete Einheit integriert, eine Einlaßöffnung (18) für den Arbeitsraum verwendet, die außerdem die Funktion des Vorauslasses sicherstellt und in dem Verdichtungssystem einen Speicherraum (30) vorsieht, der in den Einlaßteil des Motorzyklus derart eingebunden ist, daß im Ablauf der aufeinanderfolgenden Phasen die Auslaßgase während der Vorauslaß-Phase in den Füllkanal für den Speicherraum (30) eintreten können, und zwar durch denselben Kanal (22), durch den dem Zylinder Luft zugeführt wird, daß dadurch die in dem Kanal (22) befindliche Luft für die Nachladungsphase in das Innere des Speicherraums (30) gedrückt wird, daß dann während der Spülphase die von der Spülquelle (A) für den Zylinder (14) herrührende Luft den Füllkanal (22) und dann den Zylinder selbst spülen kann, indem sie die Auslaßgase verdrängt, und daß schließlich während der Nachladungsphase die zuvor unter Druck im Speicherraum (30) gesammelte Luft ihre Energie wieder an die im Füllkanal (22) befindliche, zu diesem Zeitpunkt mit dem Zylinder (14) kommunizierende Luft abgeben kann.

2. Verfahren nach Anspruch 1, dadurch gekennzeichnet, daß die Funktionen des Speicherraums (30) und der Motor-steuerung ausschließlich durch das Zusammenwirken des Zylinders (14) und des Kolbens (12) sichergestellt werden.

3. Verfahren nach Anspruch 1 oder 2, dadurch gekennzeichnet, daß der Speicherraum (30) durch ein Volumen im Inneren des Kolbens (12) begrenzt wird.

4. Verfahren nach einem der vorhergehenden Ansprüche, dadurch gekennzeichnet, daß der Füllkanal (22) des Speicherraums einer geeigneten Kühlung unterworfen wird.

5. Verfahren nach einem der vorhergehenden Ansprüche, dadurch gekennzeichnet, daß der Speicherraum (30) einer geeigneten Kühlung unterworfen wird.

6. Verfahren nach einem der vorhergehenden Ansprüche, gekennzeichnet durch die zusätzliche Verwendung einer Kraftturbine (108), die einen Teil des Enthalpieabfalls der Auslaßgase aufnimmt.

7. Verfahren nach einem der Ansprüche 4 bis 6, dadurch gekennzeichnet, daß die Kühlung wenigstens eines der Füllkanäle bei Niederlastbetrieb unterbrochen wird.

8. Vorrichtung zum Beschicken eines Zweitakt-Verbrennungs-motors mit Hubkolben (12) und Selbstaufladung durch Nachladung, das heißt durch Einbringen einer zusätzlichen Luftcharge in den Zylinder nach dem Spülen und dem Verschließen der Auslaßöffnungen, insbesondere eines Motors mit mindestens einem einfach wirkenden Zylinder (14), bei dem alle Druckwechselphasen der beteiligten Gase, also der Spülluft und der Verbrennungsgase, im wesentlichen in einer mit dem Inneren eines Verdichtungssystems verbundenen Umgebung ablaufen, wobei das Verdichtungssystem ein Nachladungssystem umfaßt, dadurch gekennzeichnet, daß das Nachladungssystem (16) einen Kanal (22) für den Lufteinlaß in den Zylinder (14) umfaßt, der intermittierend mit der Spülluftquelle (A) oder mit einem Speicherraum (30) für unter Druck stehendes Gas kommuniziert.

9. Vorrichtung nach Anspruch 8, dadurch gekennzeichnet, daß der Lufteinlaßkanal (22) stromabwärts im Zylinder (14) auf einem Niveau mündet, das über dem der Öffnung (20) des Auslaßkanalb (24) liegt, derart, daß der Vorauslaß durch den Einlaßkanal (22) zum Füllen des Speicherraums sichergestellt ist.

10. Vorrichtung nach Anspruch 8 oder 9, dadurch gekennzeichnet, daß der Speicherraum (30) sich im Inneren des Kolbens (12) befindet und durch mindestens eine im Kolben vorgesehene Öffnung (28) stromaufwärts mit dem Kanal (22) für den Lufteinlaß in den Zylinder (14) verbunden ist und durch die natürliche Bewegung des Kolbens im Zylinder intermittierend mit dem Einlaßkanal (22) in Kommunikation gebracht wird.

11. Vorrichtung nach Anspruch 10, dadurch gekennzeichnet, daß der Speicherraum (30) ringförmig zwischen dem Lager des Pleuels oder der Kolbenstange und dem äußeren Mantel des Kolbens (12) ausgebildet ist.

12. Vorrichtung nach Anspruch 9 oder 11, dadurch gekennzeichnet, daß der Kolben (12) einen Kanal (32) zur Zufuhr von Luft von der Luftquelle umfaßt, der durch die natürliche Bewegung des Kolbens (12) im Zylinder (14) intermittierend stromaufwärts (bei 26) an den Kanal (22) für den Lufteinlaß in den Zylinder (14) anschließt.

13. Vorrichtung nach Anspruch 12, dadurch gekennzeichnet, daß der Luftzufuhrkanal (32) stromaufwärts mit der Luftquelle (A) und stromabwärts über Öffnungen (34) mit einem Ringkanal (36) kommuniziert, der oberhalb des Speicherraums (30) und unter dem Boden des Kolbens (12) angeordnet ist und intermittierend über eine Öffnung (38) stromaufwärts mit dem Einlaßkanal (22) kommuniziert.

14. Vorrichtung nach einem der Ansprüche 8 bis 13, dadurch gekennzeichnet, daß der Lufteinlaßkanal (22) durch mindestens einen gekrümmten, sich um den Zylinder (14) legenden Kanal gebildet wird, um ein ausreichendes Volumen zur Bildung eines Ladeluftvorrats für die Nachladung darzustellen.

15. Vorrichtung nach einem der Ansprüche 8 bis 14, dadurch gekennzeichnet, daß die Länge des Kolbens (12) derart ist, daß der Kolben (12) am äußeren Totpunkt die stromaufwärtige Öffnung (26) des Einlaßkanals (22) verschließt.

16. Vorrichtung nach einem der Ansprüche 8 bis 15, dadurch gekennzeichnet, daß das volumen des Speicherraums (30) üblicherweise 30 bis 60 % des Hubraums des Zylinders (14) beträgt.

17. Vorrichtung nach einem der Ansprüche 8 bis 16, dadurch gekennzeichnet, daß das Volumen des Einlaßkanals (22) und das Volumen des Speicherraums (30) in Relation zu dem Volumen des Zylinders (14) und den im Zylinder (14) zum Zeitpunkt des Vorauslasses herrschenden thermodynamischen Bedingungen berechnet sind, so daß die Grenzfläche (F) zwischen den Vorauslaß-Gasen und der in Richtung des Speicherraums (30) verdrängten Luft vorzugsweise am Ende der Vorauslaß-Phase nicht in den Speicherraum (30) eindringt.

18. Vorrichtung nach einem der Ansprüche 8 bis 17, dadurch gekennzeichnet, daß das Gesamtvolumen des Einlaßkanals (22) geringfügig kleiner als das Volumen des Speicherraums (30) ist, und daß es abhängig von den thermodynamischen Arbeitsbedingungen im Zyklus, insbesondere vom Luft-Brennstoff-Verhältnis, ist.

**Claims**

1. Process for arranging a two-stroke internal combustion engine with reciprocating piston (12) and autosupercharging through the post-filling effect, i.e. the introduction of an additional charge of air into the cylinder after scavenging and closing of the exhaust apertures, notably an engine with at least one single action cylinder (14), in which all the phases of pressure exchange between the gases concerned, namely burnt scavenging air and gas, are essentially carried out in a closed environment at the heart of a compressor system, the engine comprising at least one intake aperture (18), at least one exhaust aperture (20) and a pre-exhaust aperture, characterised in that it consists in completely integrating the compressor system in the cylinder-head unit of the cylinder, using for the working chamber an intake aperture (18) which additionally ensures the pre-exhaust function, and in that a storage chamber (30) is provided in the compressor system linked to the intake part of the driving cycle such that, at the time of the pre-exhaust phase, the development of the successive phases allows exhaust gas to penetrate into the feed path of the storage chamber (30) by the same path (22) which brings the air to the cylinder, thus compressing the air, occupying said path (22), inside said storage chamber (30) awaiting the post-filling phase then, at the time of the scavenging phase, allows the air coming from the scavenging source (A) of the cylinder (14) to scavenge said feed path (22) then the cylinder itself by forcing back the exhaust gases, and finally, at the time of the post-filling phase, allows the air previously accumulated under pressure in the storage chamber (3) to return its energy to the air present in said feed path (22), at that time in communication with the cylinder (14).

2. Process acccording to claim 1, characterised in that the functions respectively of the storage chamber (30) and distribution chamber are secured exclusively by the cooperation of the cylinder (14) and of the piston (12).

3. Process according to claim 1 or 2, characterised in that the storage chamber (30) is defined by an internal capacity of the piston (12).

4. Process according to one of the preceding claims, characterised in that the feed path (22) of the storage chamber is subject to appropriate cooling.

5. Process according to one of the preceding claims, characterised in that the storage chamber (30) is subject to an appropriate cooling.

6. Process according to one of the preceding claims, characterised by the complementary use of a power turbine (108) extracting a fraction of the drop in enthalpy of the exhaust gases.

7. Process according to one of claims 4 to 6, characterised in that the cooling of at least the feed paths is interrupted under small loads.

8. Device for arranging a two-stroke internal combustion engine with reciprocating piston (12) and with autosupercharging through the post-filling effect, i.e. introduction of an additional charge of air into the cylinder after scavenging and closing of the exhaust apertures, notably an engine with at least one single action cylinder (14), in which all the phases of pressure exchange between the gases concerned, namely burnt scavenging air and gas, are carried out essentially in a closed environment in the heart of a compressor system comprising a post-filling system, characterised in that the post-filling system (16) comprises the air intake conduit (22) to the cylinder (14) which communicates intermittently either with the scavenging air source (A), or with a pressurised gas storage chamber (30).

9. Device according to claim 8, characterised in that the air intake conduit (22) opens downstream into the cylinder (14) at a level above that of the port (20) of the exhaust conduit (24) so as to secure the pre-exhaust through the intake conduit (22) with a view to filling the above-mentioned storage chamber.

10. Device according to claim 8 or 9, characterised in that the storage chamber (30) is inside the piston (12) and is linked, upstream of the air intake conduit (22), to the cylinder (14), by at least one port (28) formed in the piston, intermittently put into communication with said air intake conduit (22) by the natural movement of the piston in the cylinder.

11. Device according to claim 10, characterised in that the storage chamber (30) is made to be annular between the housing of the connecting rod or of the piston rod and the exterior skirt of the piston (12).

12. Device according to claim 9 or 11, characterised in that said piston (12) comprises an air intake conduit (32) from the air source leading intermittently upstream (at 26) of the air intake conduit (22) to the cylinder (14) by the natural movement of the piston (12) in the cylinder (14).

13. Device according to claim 12, characterised in that the air intake conduit (32) communicates upstream with the air source (A) and downstream through ports (34) with an annular conduit (36) disposed above the storage chamber (30) and under the head of the piston (12), and which communicates intermittently upstream of the intake conduit (22) through a port (38).

14. Device according to one of claims 8 to 13, characterised in that the air intake conduit (22) is formed by at least one elbow conduit extending around the cylinder (14) to present a volume sufficient to constitute a filling-air reserve used for the post-filling.

15. Device according to one of claims 8 to 14, characterised in that the length of the piston (12) is such that at the high dead point the piston (12) seals the upstream port (26) of the intake conduit (22).

16. Device according to one of claims 8 to 15, characterised in that the volume of the storage chamber (30) generally represents from about 30 to 60% of the cubic capacity of the cylinder (14).

17. Device according to one of claims 8 to 16, characterised in that the volume of the intake conduit (22) and the volume of the storage chamber (30) are calculated in relation to the volume of the cylinder (14) and the thermodynamic conditions prevailing in the cylinder (14) at the time of pre-exhaust so that the interface front (F) of separation of the pre-exhaust gases and the air forced back in the direction of the storage chamber (30), preferably does not penetrate into the storage chamber (30) at the end of the pre-exhaust phase.

18. Device according to one of claims 8 to 17, characterised in that the total volume of the intake conduits (22) is slightly lower than the volume of the storage chamber (30) and is a function of the thermodynamic functioning conditions of the cycle, especially of the air/fuel relationship.

FIG.1b

FIG.1a

FIG.2

FIG.7

FIG.3b

FIG.3a

FIG.4b            FIG.4a

FIG.5b            FIG.5a

FIG.6b            FIG.6a

FIG. 8

# FIG.9b

# FIG.9a

# FIG.10